# EUROPÄISCHE PATENTSCHRIFT

(11) **EP 1 790 624 B1**
(45) Veröffentlichungstag und Bekanntmachung des Hinweises auf die Patenterteilung: **10.08.2011**
(21) Anmeldenummer: 06024599.0
(22) Anmeldetag: 28.11.2006
(51) Int. Cl.: C04B 38/10

(54) **Verwendung eines Mörtels zur Verfüllung von Hohlräumen**
Use of a mortar for filling of cavities
Utilisation d'un mortier pour le remplissage des cavités

(30) Priorität: 28.11.2005 DE 102005056785
(43) Veröffentlichungstag der Anmeldung: 30.05.2007
(73) Patentinhaber: Hochtief Construction AG, 45128 Essen (DE)
(72) Erfinder: Ebsen, Bente Dipl.-Ing., 64521 Groß Gerau (DE); Billig, Bodo Dipl.-Ing., 45481 Mülheim (DE)
(74) Vertreter: Rohmann, Michael

(56) Entgegenhaltungen:
- DE-A1- 2 032 557
- DE-A1- 4 133 577
- DE-A1- 10 124 247
- DE-U1- 8 100 581
- DE-U1- 20 006 615
- GB-A- 2 372 033
- DATABASE WPI Week 199008 Derwent Publications Ltd., London, GB; AN 1990-056419 XP002477944 -& NL 8 801 694 A (AARDING WEERSTANDLAS BV) 1. Februar 1990 (1990-02-01)
- DATABASE WPI Week 200436 Derwent Publications Ltd., London, GB; AN 2004-376576 XP002477945 & CN 1 458 112 A (WANG S) 26. November 2003 (2003-11-26)
- DATABASE WPI Week 200029 Derwent Publications Ltd., London, GB; AN 2000-337737 XP002477946 & RU 2 132 835 C1 (CONSTR IND RES DES TECHN INST) 10. Juli 1999 (1999-07-10)

## Beschreibung

Die Erfindung betrifft eine Verwendung einer Mörtelmischung als Ringspaltmörtel im unterirdischen Tunnelbau zur Verfüllung von Hohlräumen und zur nachgiebigen Aufnahme von mechanischen Kräften im erhärteten Zustand. Nachgiebige Aufnahme von mechanischen Kräften im erhärteten Zustand meint hier, dass der in einem Hohlraum erhärtete Mörtel unter Einwirkung mechanischer Kräfte zu einem gewissen Ausmaß komprimierbar bzw. verformbar ist. Der erfindungsgemäße Mörtel eignet sich vor allem als Ringspaltmörtel im unterirdischen Tunnelbau bzw. Felstunnelbau zur Verfüllung des Ringspaltes zwischen einem Tübbingausbau und dem angrenzenden Gebirge.

Aus NL 8 801 694 sind Wärme isolierende Baumaterialien und ein Verfahren zur Herstellung eines Wärme isolierenden Baumaterials bekannt. Darüber hinaus ist aus DE 101 24 247 ein Verfahren zur Herstellung einer Schaummasse bekannt, aus der insbesondere Wärmedämm- und/oder Trittschalldämmmassen herstellbar sind. Die Wärmedämm- und/oder Trittschalldämmmassen werden aus einem Zementleim und einem Schaummittel gefertigt, wobei diesem Gemisch ein aufgeschäumtes Polymerisat zugeführt wird. Die aus DE 101 24 247 A1 bekannten Wärmedämm- und/oder Trittschalldämmmassen werden in Gebäuden eingesetzt. Aus DE 41 33 577 A1 ist ein Verfahren bekannt, mit dem dynamische Einwirkungen auf den Ausbau untertägiger Hohlräume durch den Einbau einer Schock absorbierenden, flächigen Zwischenlage vermindert oder vermieden werden. Als Schock absorbierende, flächige Zwischenlage werden Schaumstoffe, Filamente, Netze oder Verbundwerkstoffe eingesetzt, die auf einer Spritzbetonaußenschale aufgebracht werden.

Bei einem unterirdischen Tunnelausbau mit Tübbingringen besteht das grundsätzliche Problem, dass durch Gebirgsverformungen nur schwierig vorausberechenbare hohe Kräfte bzw. Drücke entstehen, die den Tübbingausbau beeinträchtigen können. Eine Möglichkeit den hohen Gebirgsdrücken entgegenzutreten besteht darin, den Tübbingausbau ausreichend widerstandsfähig einzurichten. Diese Möglichkeit stößt jedoch bei großen Gebirgsverformungen auf ihre Grenzen. Eine andere Möglichkeit liegt darin, eine gewisse Nachgiebigkeit des Ausbaus gegenüber den hohen Verformungen zu gewährleisten. Es ist bereits aus der Praxis bekannt, eine in radialer Richtung verformbare Schicht zwischen der Tübbingauskleidung und dem Gebirge vorzusehen. In diesem Zusammenhang sind auch spezielle Mörtel bzw. Ringspaltmörtel bekannt, die diesen Ringspalt zwischen den Tübbingringen und dem Gebirge ausfüllen. Bei diesen bekannten Ringspaltmörteln lässt das Stauchverhalten aber in der Regel zu wünschen übrig und deshalb findet bei sehr hohen Gebirgsverformungen nichtsdestoweniger eine unerwünscht hohe Belastung der Tübbingauskleidung statt. Im Ergebnis zeichnen sich die erhärteten bekannten Ringspaltmörtel durch eine nicht zufriedenstellende Last-Verformungscharakteristik aus. Demgegenüber liegt der Erfindung das technische Problem zugrunde, einen Mörtel der eingangs genannten Art anzugeben, bei dem die vorstehend beschriebenen Nachteile vermieden werden können und der sich durch ein optimales Stauchverhalten auch bei größeren und insbesondere zeitabhängigen Gebirgsverformungen auszeichnet. Es soll insbesondere ein Mörtel angegeben werden, der sich durch eine ideale Last-Verformungscharakteristik auszeichnet.

Zur Lösung dieses technischen Problems lehrt die Erfindung eine Verwendung einer Mörtelmischung als Ringspaltmörtel im unterirdischen Tunnelbau zur Verfüllung von Hohlräumen und zur nachgiebigen Aufnahme von mechanischen Kräften im erhärteten Zustand des Mörtels, wobei zumindest ein hydraulisches Bindemittel enthalten ist, wobei weiterhin feste Teilchen zumindest eines Polymerschaumstoffes als Zuschlagstoff enthalten sind und wobei fernerhin zumindest ein flüssiger Schaum sowie Wasser in dem Mörtel enthalten ist.

Zur nachgiebigen Aufnahme von mechanischen Kräften im erhärteten Zustand meint - wie eingangs bereits dargelegt - dass der in einem Hohlraum erhärtete Mörtel zu einem bestimmten Ausmaß verformbar bzw. komprimierbar ist. Wie ebenfalls eingangs bereits ausgeführt, wird der erfindungsgemäße Mörtel nach besonders bevorzugter Ausführungsform der Erfindung als Ringspaltverfüllung im Tunnelbau bzw. Felstunnelbau verwendet, wobei ein Ringspalt zwischen einem Tübbingausbau und dem angrenzenden Gebirge mit dem Mörtel verfüllt wird. In diesem Zusammenhang meint die nachgiebige Aufnahme von mechanischen Kräften, dass der in dem Ringspalt erhärtete Mörtel zu einem bestimmten Ausmaß in radialer Richtung des Tunnelausbaus verformbar bzw. komprimierbar ist.

Die im Patentanspruch 1 beanspruchten Komponenten des Mörtels und auch die weiteren Angaben zu dem erfindungsgemäßen Mörtel beziehen sich hier - soweit nicht anders angegeben - auf den noch nicht erhärteten Mörtel, das heißt auf den Frischmörtel. - Im Patentanspruch 1 wird im Übrigen zum einen ein flüssiger Schaum und zum anderen Wasser angegeben. Damit ist insbesondere auch gemeint, dass der flüssige Schaum Wasser enthalten kann und der Mörtel bzw. Frischmörtel zusätzlich zu diesem wasserhaltigen flüssigen Schaum das genannte weitere Wasser enthält. - Soweit hier von flüssigen Komponenten des Mörtels (Frischmörtel), beispielsweise von flüssigem Schaum die Rede ist, versteht es sich, dass diese Komponenten im erhärteten Zustand des Mörtels in fester Form vorliegen.

Es liegt im Rahmen der Erfindung, dass der Mörtel zumindest ein hydraulisches Bindemittel, zweckmäßigerweise zumindest einen Zement enthält. Vorzugsweise enthält der Mörtel Hochofenzement und nach sehr bevorzugter Ausführungsform Hochofenzement CEM III/A 32,5 N. - Es liegt weiterhin im Rahmen der Erfindung, dass der Mörtel zumindest ein latent hydraulisches Bindemittel und bevorzugt Flugasche als latent hydraulisches Bindemittel enthält. Gemäß einer Ausführungsform der Erfindung sind hydraulisches Bindemittel bzw. Zement und latent hydraulisches Bindemittel bzw. Flugasche in etwa gleichen Anteilen in dem erfindungsgemäßen Mörtel enthalten.

Vorzugsweise besteht der Zuschlagstoff des Mörtels zu mindestens 85 Gew.-%, bevorzugt zu mindestens 90 Gew.-% und sehr bevorzugt zu mindestens 95 Gew.-% aus den Polymerschaumstoffteilchen. Gemäß einer bevorzugten Ausführungsvariante besteht der Zuschlagstoff ausschließlich aus den Polymerschaumstoffteilchen. - Eine sehr bevorzugte Ausführungsform der Erfindung ist dadurch gekennzeichnet, dass die Teilchen aus dem Polymerschaumstoff aus geschäumtem Polystyrol (EPS) bestehen. - Zweckmäßigerweise haben die Teilchen aus dem Polymerschaumstoff bzw. die Teilchen aus dem geschäumten Polystyrol einen größten Durchmesser von 0,2 bis 7 mm, vorzugsweise von 0,3 bis 6 mm und bevorzugt von 0,3 bis 5 mm. Gemäß einer besonderen Ausführungsform der Erfindung beträgt der größte Durchmesser der Teilchen aus dem Polymerschaustoff 0,5 bis 4 mm und sehr bevorzugt 0,5 bis 2 mm. Die Schüttdichte der Teilchen aus dem Polymerschaumstoff, vorzugsweise aus dem geschäumten Polystyrol beträgt zweckmäßigerweise 11 bis 17 kg/m³ und vorzugsweise 13 bis 15 kg/m³. Eine besonders bevorzugte Ausführungsform der Erfindung ist dadurch gekennzeichnet, dass kugelförmige Teilchen aus dem Polymerschaumstoff und sehr bevorzugt Kugeln aus geschäumtem Polystyrol als Polymerschaumstoffteilchen eingesetzt werden. Zweckmäßigerweise nimmt der Polymerschaumstoff in dem erfindungsgemäßen Mörtel einen Volumenanteil von 500 bis 900 dm³/m³, vorzugsweise von 550 bis 850 dm³/m³, bevorzugt von 600 bis 800 dm³/m³ und besonders bevorzugt von 650 bis 750 dm³/m³ ein.

Dem erfindungsgemäß in dem Mörtel enthaltenen flüssigen Schaum kommt im Hinblick auf die Lösung des technischen Problems ganz besondere Bedeutung zu. Es liegt im Rahmen der Erfindung, dass für den Mörtel ein flüssiger Schaum auf Tensid-Basis eingesetzt wird. Zweckmäßigerweise enthält der flüssige Schaum zumindest ein anionisches Tensid und/oder zumindest ein nichtionisches Tensid und/oder zumindest ein zwitterionisches Tensid. Flüssiger Schaum meint im Rahmen der Erfindung einen fließfähigen bzw. pumpfähigen Schaum, der eine bestimmte Flüssigkeitsviskosität aufweist. Jedenfalls handelt es sich bei diesem Schaum im Gegensatz zu dem eingesetzten Polymerschaumstoff nicht um einen festen Schaum. Der erfindungsgemäß eingesetzte flüssige Schaum enthält zumindest ein Tensid, vorzugsweise zumindest ein anionisches Tensid und bevorzugt mehr als ein anionisches Tensid. Zweckmäßigerweise wird der flüssige Schaum aus einem Schaumkonzentrat erzeugt, dass das zumindest eine Tensid bzw. das zumindest eine anionische Tensid sowie vorzugsweise Wasser enthält. Das Schaumkonzentrat wird dann bevorzugt unter Luft- bzw. Druckluftzufuhr und/oder Wasserzufuhr aufgeschäumt. Das Schaumkonzentrat enthält dazu zumindest ein schäumbares bzw. schäumfähiges Tensid, vorzugsweise zumindest ein schäumfähiges anionisches Tensid. Der dabei gebildete Schaum wird dann in dem Mörtel eingesetzt. Das Schaumkonzentrat bzw. der daraus erzeugte flüssige Schaum enthält zweckmäßigerweise zumindest ein Olefinsulfonat bzw. zumindest ein Natrium-Olefinsulfonat als anionisches Tensid. Es liegt im Übrigen im Rahmen der Erfindung, dass das Schaumkonzentrat bzw. der daraus erzeugte flüssige Schaum zumindest ein zwitterionisches Tensid und zwar vorzugsweise ein Alkylaminoxid enthält. Gemäß einer sehr bevorzugten Ausführungsform der Erfindung enthält das Schaumkonzentrat bzw. der daraus erzeugte flüssige Schaum das Natriumsalz von Sulfohydroxipoly (oxy-1,2-ethandiyl)-C10-C16-alkylether als erstes anionisches Tensid und Natrium-Olefinsulfonat als zweites anionisches Tensid sowie Alkylaminoxid als zwitterionisches Tensid. Zweckmäßigerweise ist der flüssige Schaum bzw. das Schaumkonzentrat chloridfrei. Die Dichte des Schaumkonzentrates beträgt beispielsweise 1,05 kg/dm³.

Nach besonders bevorzugter Ausführungsform der Erfindung beträgt die Schaumdichte des flüssigen Schaums (d.h. des aus dem Schaumkonzentrat durch Aufschäumen hergestellten Schaums) 0,05 bis 0,11 kg/dm³, vorzugsweise 0,06 bis 0,1 kg/dm³, und bevorzugt 0,07 bis 0,09 kg/dm³. Zweckmäßigerweise handelt es sich bei dem flüssigen Schaum um einen monozellularen Schaum. - Geeigneterweise ist der flüssige Schaum in einer Menge von 1 bis 7 kg/m³, vorzugsweise 2 bis 6 kg/m³ und bevorzugt 3 bis 5 kg/m³ in dem Mörtel bzw. Frischmörtel enthalten. - Eine sehr bevorzugte Ausführungsform der Erfindung ist dadurch gekennzeichnet, dass der Volumenanteil des dem Mörtel zugesetzten flüssigen Schaums 20 bis 100 dm³/m³ vorzugsweise 25 bis 95 dm³/m³, bevorzugt 30 bis 90 dm³/m³ und sehr bevorzugt 35 bis 85 dm³/m³ beträgt. Es liegt im Rahmen der Erfindung, dass dieser Volumenanteil des flüssigen Schaums 40 bis 80 dm³/m³ und ganz besonders bevorzugt 45 bis 75 dm³/m³ beträgt. Die vorgenannten Volumenanteile des Schaums sind so zu verstehen, dass das entsprechende Schaumvolumen in dm³ mit den übrigen Komponenten gemischt wird, so dass 1 m³ Mörtel resultiert. Dabei sind zweckmäßigerweise die oben angegebenen Werte für die Schaumdichte verwirklicht.

Es liegt im Übrigen im Rahmen der Erfindung, dass der Mörtel zumindest ein Fließmittel enthält. Als Fließmittel kann dabei insbesondere Naphtalinsulfonsäurepolykondensat in wässriger Lösung eingesetzt werden.

Zweckmäßigerweise sind in dem Mörtel 140 bis 220 GT, vorzugsweise 150 bis 210 GT, bevorzugt 160 bis 200 GT hydraulisches Bindemittel enthalten und weiterhin sind zweckmäßigerweise 140 bis 220 GT, vorzugsweise 150 bis 210 GT, bevorzugt 160 bis 200 GT latent hydraulisches Bindemittel enthalten und fernerhin sind in dem Mörtel zweckmäßigerweise 6 bis 17 GT, vorzugsweise 7 bis 16 GT, bevorzugt 8 bis 15 GT an festen Teilchen des Polymerschaumstoffes enthalten. Zweckmäßigerweise sind zusätzlich 1 bis 7 GT, vorzugsweise 2 bis 6 GT, bevorzugt 3 bis 5 GT flüssiger Schaum in dem Mörtel enthalten und außerdem sind zweckmäßigerweise 100 bis 170 GT, vorzugsweise 110 bis 160 GT, bevorzugt 120 bis 150 GT Wasser in dem Mörtel vorhanden. Die Abkürzung GT steht für Gewichtsteile. Nach bevorzugter Ausführungsform der Erfindung enthält der Mörtel 165 bis 195 GT hydraulisches Bindemittel, 165 bis 195 GT latent hydraulisches Bindemittel, 8 bis 12 GT feste Teilchen des Polymerschaumstoffes, 3 bis 5 GT des flüssigen Schaums und 125 bis 145 GT Wasser. Zweckmäßigerweise enthält der Mörtel zusätzlich 0,3 bis 2 GT, vorzugsweise 0,5 bis 1,5 GT, bevorzugt 0,6 bis 1,4 GT zumindest eines Fließmittels. Es versteht sich, dass die vorstehend angegebenen Gewichtsteil-Bereiche auch für die zu den allgemeinen Produktoberbegriffen hier angegebenen bevorzugten Substanzen gelten.

Es liegt im Rahmen der Erfindung, dass die Frischmörteldichte auf 300 bis 1.000 kg/m³, vorzugsweise auf 400 bis 800 kg/m³ und bevorzugt auf 400 bis 650 kg/m³ eingestellt wird. Nach einer besonderen Ausführungsform der Erfindung wird die Frischmörteldichte auf 450 bis 500 kg/m³, beispielsweise auf 470 bis 480 kg/m³ eingestellt.

Der Erfindung liegt die Erkenntnis zugrunde, dass der Mörtel in seinem erhärteten Zustand ein optimales Stauchungsverhalten aufweist. Wenn der Mörtel als Ringspaltmörtel für die Verfüllung des Ringspaltes zwischen einem Tübbingringausbau und dem angrenzenden Gebirge eingesetzt wird, zeichnet er sich durch hervorragende radiale Verformungseigenschaften bei der Einwirkung von hohen Gebirgsdrücken/Gebirgsverformungen aus. Der Erfindung liegt weiterhin die Erkenntnis zugrunde, dass der Mörtel bzw. Ringspaltmörtel aufgrund seines relativ großen Porenvolumens in der Lage ist, extreme Stauchungen bis beispielsweise etwa 40 bis 50 % zu ertragen, ohne dass dabei seine Tragfähigkeit beeinträchtigt wird. Der Ringspaltmörtel erlaubt aufgrund seines großen Stauchvermögens auch starke Gebirgsverformungen aufzunehmen und dadurch wird nur eine begrenzte Belastung auf die Tübbingauskleidung übertragen. Der Erfindung liegt in diesem Zusammenhang die Erkenntnis zugrunde, dass der Mörtel eine optimale Last-Verformungscharakteristik aufweist, die dadurch gekennzeichnet ist, dass der erhärtete Mörtel bei einer Erstbelastung zunächst bis zu einer sogenannten "Stauchspannung" quasi elastisch reagiert und dass bei weiter zunehmender Belastung das Materialverhalten quasi plastisch ist, d.h. bei weiterer Belastung werden nur relativ geringe zusätzliche Kräfte bei gleichzeitig hohem Zusammendrücken (bis beispielsweise 50 %) geweckt. In diesem Zusammenhang ist zu betonen, dass der Mörtel auf verhältnismäßig einfache Weise und auch auf relativ kostengünstige Weise herstellbar ist. Im Ergebnis zeichnet sich der Mörtel gegenüber den aus dem Stand der Technik bekannten Verfüllmaterialien bzw. Mörteln durch beachtliche Vorteile aus.

Nachfolgend wird die Erfindung anhand eines konkreten Ausführungsbeispiels einer Mörtelzusammensetzung näher erläutert. Gemäß diesem Ausführungsbeispiel enthält der Mörtel 170 bis 190 kg/m³ Zement, bevorzugt Hochofenzement CEM III/A 32, 5 N, 170 bis 190 kg/m³ Flugasche, 9 bis 10 kg/m³ geschäumte Polystyrolkugeln (EPS-Kugeln) mit einem Durchmesser von 0,5 bis 2 mm als Zuschlagstoff und 0,8 bis 1,0 kg/m³ Fließmittel. Weiterhin enthält dieser Mörtel 3 bis 5 kg/m³ an flüssigem Schaum auf Tensid-Basis (aufgeschäumter Zustand) und 130 bis 140 kg/m³ Wasser. Der Bindemittelleim aus Zement, Flugasche, Fließmittel und Wasser weist dabei einen Volumenanteil von 260 bis 270 dm³/m³ auf. Die geschäumten Polystyrolkugeln werden in einem Volumenanteil von 680 bis 700 dm³/m³ zugegeben und der flüssige Schaum in einem Volumenanteil von 50 bis 70 dm³/m³ zugegeben. Die vorgenannten Volumenanteile sind auch hier so zu verstehen, dass das entsprechende Volumen an Polystyrolkugeln und das entsprechende Schaumvolumen in dm³ mit den übrigen Komponenten gemischt wird, so dass 1 m³ Mörtel resultiert. - Die Frischmörtelrohdichte beträgt 470 bis 480 kg/m³ und die Festmörtelrohdichte des erhärteten Mörtels beträgt 420 bis 430 kg/m³. Nach 7 Tagen wurde eine Druckfestigkeit des erhärteten Mörtels von 0,5 N/mm² und nach 28 Tagen eine Druckfestigkeit von 0,7 N/mm² gemessen.

Zur Herstellung des Mörtels werden die vorstehend beschriebenen Komponenten zu dem Mörtel gemischt. Nachfolgend wird eine bevorzugte Verfahrensweise als Ausführungsbeispiel erläutert. Die Polymerschaumstoffteilchen, vorzugsweise die geschäumten Polystyrolkugeln werden mit Wasser und Fließmittel gemischt und es wird dann zweckmäßigerweise 45 bis 60 sec mit einem

Mischer gemischt. Anschließend werden Zement und Flugasche zugefügt und die Mischung wird dann vorzugsweise 45 bis 60 sec mit einem Mischer gemischt. Ein Schaumkonzentrat auf Tensid-Basis wird aufgeschäumt und der dabei erzeugte Schaum wird der Mischung zugegeben. Bevorzugt erfolgt ein homogenes Einmischen des Schaums in die Mörtelmischung.

Bei einem Aufschäumen des Schaumkonzentrates wird zweckmäßigerweise die Dichte des entstehenden flüssigen Schaums durch Variieren des Luftdrucks und/oder des Wasserdrucks und/oder durch Variieren der Menge des Schaumkonzentrates eingestellt. Über die zugegebene Schaummenge wird dann vorzugsweise die Dichte des Frischmörtels eingestellt. Bevorzugte Werte für die Dichte des Frischmörtels wurden bereits oben angegeben.

Bei der erfindungsgemäßen Verwendung des Mörtels als Ringsspaltmörtel zur Verfüllung des Zwischenraums bzw. Ringspaltes zwischen einer Tübbingauskleidung und dem angrenzenden Gebirge bei einem Tunnelausbau bzw. Felstunnelausbau wird der Ringspaltmörtel nach besonders bevorzugter Ausführungsform durch Verpressung durch den Schildschwanz einer Tunnelvortriebsmaschine in den Ringspalt eingebracht. Grundsätzlich kann der Ringspaltmörtel auch durch Öffnungen in den Tübbings in den Ringspalt eingebracht werden. Bevorzugt ist aber die Verpressung durch den Schildschwanz. Die Breite des Ringspaltes beträgt beispielsweise etwa 15 cm. Aufgrund des optimalen Verformungsverhaltens bzw. Stauchungsverhaltens kann der den Ringspalt ausfüllende Ringspaltmörtel im erhärteten Zustand Verformungen in der Größenordnung von 7,5 cm (ca. 50 %) aufnehmen. Nachfolgend wird die Erfindung anhand einer lediglich ein Ausführungsbeispiel darstellenden Zeichnung näher erläutert. Es zeigen in schematischer Darstellung:
- Fig. 1: einen Schnitt durch einen erfindungsgemäßen Tunnelausbau in einer ersten Ausführungsform und
- Fig. 2: den Gegenstand gemäß Fig. 1 in einer anderen Ausführungsform.

Die Figuren zeigen einen unterirdischen Tunnelausbau mit einer Auskleidung aus Tübbingringen 1. Die Tübbingringe 1 werden in üblicher Weise durch Tübbings 2 gebildet, die aus Stahlbeton, Stahlfaserbeton oder aus einem anderen Material bestehen. Im Übrigen kann eine Dichtung 3 zur Abdichtung des Tübbingausbaus vorgesehen werden. Über die gezeigte einschalige Bauweise hinaus kann das nachgiebige System aus Tübbings 2 und Mörtel auch als zweischaliges System in Verbindung mit einer Ortbeton-Innenschale verwendet werden.

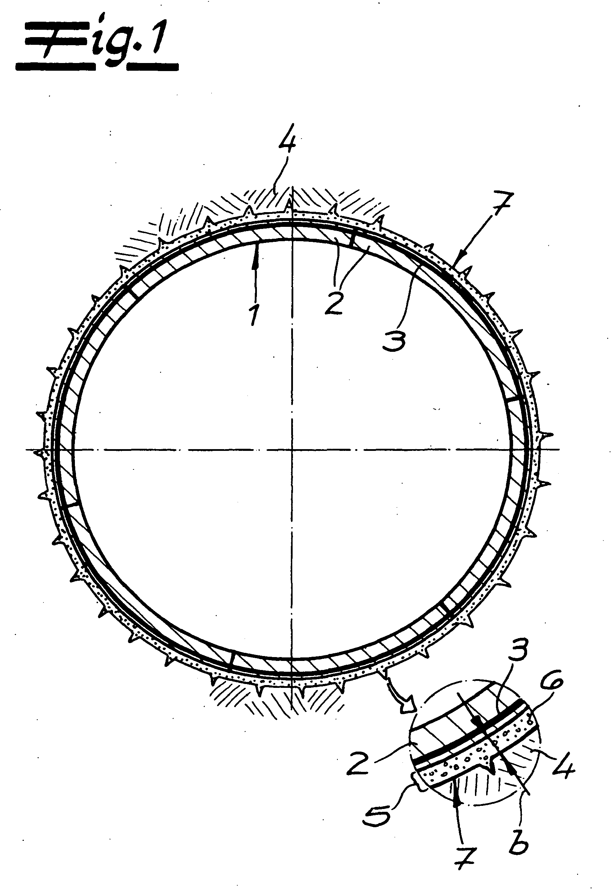

In Fig. 1 ist zwischen dem Tübbingring 1 und dem Gebirge 4 ein Ringspalt 5 angeordnet. Der Ringspalt mag im Ausführungsbeispiel eine Breite b von 15 cm aufweisen. Im Ausführungsbeispiel nach Fig. 1 ist dieser Ringspalt 5 mit dem Mörtel 6 bzw. Ringspaltmörtel gefüllt. Der vergrößerte Ausschnitt der Fig. 1 zeigt, dass der Mörtel 6 über ein relativ großes Porenvolumen verfügt. Die erfindungsgemäße Merkmalskombination bedingt, dass der im Ringspalt 5 erhärtete Mörtel 6 eine optimale Verformbarkeit in radialer Richtung bzw. optimale Stauchungseigenschaften aufweist. Der erhärtete Mörtel 6 zeichnet sich durch eine hervorragende Last-Verformungscharakteristik aus. Der Mörtel 6 kann Stauchungen bis zu 50 % aufnehmen, was bei der genannten Ringspaltbreite b einer radialen Verformung in der Größenordnung von 7,5 cm entsprechen würde. Es ist zu betonen, dass die optimale Last-Verformungscharakteristik des erhärteten Mörtels sich dadurch auszeichnet, dass der Mörtel 6 bei einer Erstbelastung zunächst bis zu einer sogenannten "Stauchspannung" quasi elastisch reagiert und dass bei weiter zunehmender Belastung das Materialverhalten quasi plastisch ist, das heißt bei weiterer Belastung werden nur relativ geringe zusätzliche Kräfte bei gleichzeitig hohen Zusammendrückungen (bis ca. 50 %) geweckt.

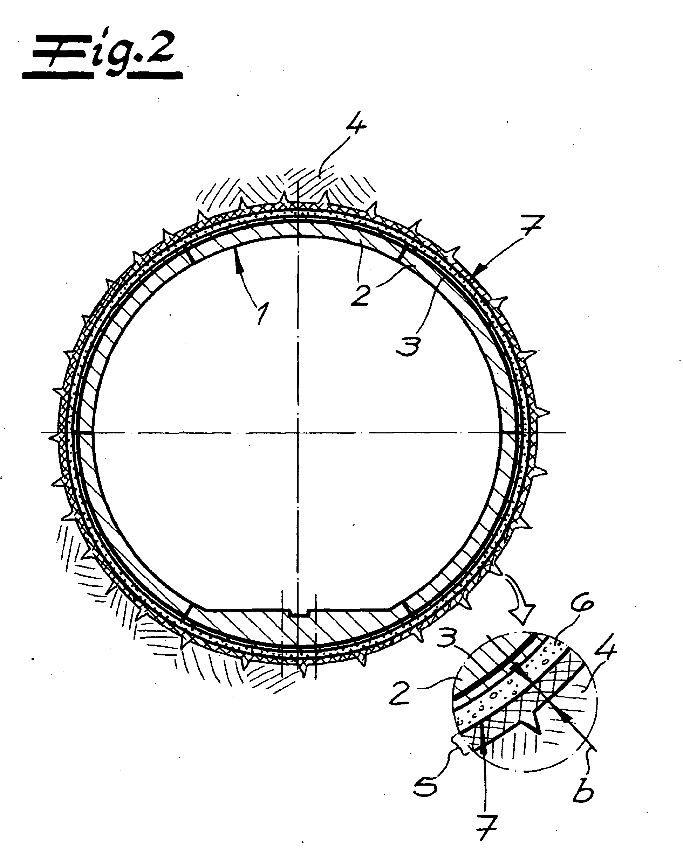

Die Fig. 2 zeigt eine zweite Ausführungsform der Erfindung, bei der der erhärtete Mörtel 6 bereits von vornherein auf die gebirgsseitigen Tübbingrücken der Tübbings 2 aufgebracht ist. Dadurch ergibt sich an den Tübbingringen 1 eine gebirgsseitige Mörtelschicht 7, die bei extremen Belastungen entsprechend komprimierbar ist. Der zwischen der auf den Tübbings 2 aufgebrachten Mörtelschicht 7 und dem Gebirge 4 vorhandene Ringspalt 5 kann dann entweder mit konventionellem Ringspaltfüllmaterial (Fig. 2) oder aber bevorzugt ebenfalls mit dem Mörtel 6 verfüllt werden.

## Patentansprüche

1. Verwendung einer Mörtelmischung als Ringspaltmörtel im unterirdischen Tunnelbau zur Verfüllung von Hohlräumen und zur nachgiebigen Aufnahme von mechanischen Kräften im erhärteten Zustand des Mörtels,
wobei zumindest ein hydraulisches Bindemittel enthalten ist,
wobei weiterhin Teilchen zumindest eines Polymerschaumstoffes als Zuschlagstoff in dem Mörtel enthalten sind und wobei fernerhin zumindest ein flüssiger Schaum sowie Wasser in dem Mörtel enthalten ist.

2. Verwendung nach Anspruch 1, wobei das zumindest eine hydraulische Bindemittel zumindest ein Zement ist.

3. Verwendung nach einem der Ansprüche 1 oder 2, wobei zumindest ein latent hydraulisches Bindemittel, vorzugsweise Flugasche in dem Mörtel enthalten ist.

4. Verwendung nach einem der Ansprüche 1 bis 3, wobei die Teilchen aus dem Polymerschaumstoff aus geschäumtem Polystyrol bestehen.

5. Verwendung nach einem der Ansprüche 1 bis 4, wobei die Teilchen aus dem Polymerschaumstoff einen Durchmesser von 0,2 bis 7 mm, vorzugsweise von 0,3 bis 6 mm und bevorzugt von 0,3 bis 5 mm aufweisen.

6. Verwendung nach einem der Ansprüche 1 bis 5, wobei ein flüssiger Schaum auf Tensid-Basis eingesetzt wird.

7. Verwendung nach einem der Ansprüche 1 bis 6, wobei die Schaumdichte des flüssigen Schaums 0,05 bis 0,11 kg/dm³, vorzugsweise 0,06 bis 0,1 kg/dm³ und bevorzugt 0,07 bis 0,09 kg/dm³ beträgt.

8. Verwendung nach einem der Ansprüche 1 bis 7, wobei der flüssige Schaum in einer Menge von 1 bis 7 kg/m³, vorzugsweise 2 bis 6 kg/m³ und bevorzugt 3 bis 5 kg/m³ in dem Mörtel enthalten ist.

9. Verwendung nach einem der Ansprüche 1 bis 8, wobei das Volumen des dem Mörtel zugesetzten flüssigen Schaumes 20 bis 100 dm³/m³, vorzugsweise 25 bis 95 dm³/m³ und bevorzugt 30 bis 90 dm³/m³ beträgt.

10. Verwendung nach einem der Ansprüche 1 bis 9, wobei 140 bis 220 GT, vorzugsweise 150 bis 210 GT, bevorzugt 160 bis 200 GT hydraulisches Bindemittel in dem Mörtel enthalten sind, wobei weiterhin 140 bis 220 GT, vorzugsweise 150 bis 210 GT, bevorzugt 160 bis 200 GT latent hydraulisches Bindemittel in dem Mörtel enthalten sind, wobei fernerhin 6 bis 17 GT, vorzugsweise 7 bis 16 GT, bevorzugt 8 bis 15 GT Polymerschaumstoffteilchen in dem Mörtel enthalten sind, wobei außerdem 1 bis 7 GT, vorzugsweise 2 bis 6 GT, bevorzugt 3 bis 5 GT flüssiger Schaum in dem Mörtel enthalten ist und wobei weiterhin 100 bis 170 GT, vorzugsweise 110 bis 160 GT, bevorzugt 120 bis 150 GT Wasser in dem Mörtel enthalten ist.

11. Verwendung nach einem der Ansprüche 1 bis 10, wobei die Frischmörteldichte auf 300 bis 1.000 kg/m³, vorzugsweise auf 400 bis 800 kg/m³ und bevorzugt auf 400 bis 650 kg/m³ eingestellt wird.

## Claims

1. A use of a mortar mixture as annular gap mortar in subterranean tunnel construction for filling cavities and for resilient absorption of forces in the hardened state of the mortar,
wherein at least one hydraulic binding agent is contained,
wherein, furthermore, particles of at least one polymer foam are contained as aggregate in the mortar and wherein further, at least one liquid foam as well as water is contained in the mortar.

2. The use according to claim 1, wherein the at least one hydraulic binding agent is at least a cement.

3. The use according to claim 1 or claim 2, wherein at least one latently hydraulic binding agent, preferably fly ash, is contained in the mortar.

4. The use according to any one of the claims 1 to 3, wherein the particles from the polymer foam consist of foamed polystyrene.

5. The use according to any one of the claims 1 to 4, wherein the particles from the polymer foam have a diameter of 0.2 to 7 mm, preferably of 0.3 to 6 mm and preferred of 0.3 to 5 mm.

6. The use according to any one of the claims 1 to 5, wherein a tenside-based liquid foam is used.

7. The use according to any one of the claims 1 to 6, wherein the foam density of the liquid foam is 0.05 to 0.11 kg/dm³, preferably 0.06 to 0.1 kg/dm³ and preferred 0.07 to 0.09 kg/dm³.

8. The use according to any one of the claims 1 to 7, wherein the liquid foam is contained in the mortar in quantities of 1 to 7 kg/m³, preferably 2 to 6 kg/m³ and preferred 3 to 5 kg/m³.

9. The use according to any one of the claims 1 to 8, wherein the volume of the foam added to the mortar is 20 to 100 dm³/m³, preferably 25 to 95 dm³/m³ and preferred 30 to 90 dm³/m³.

10. The use according to any one of the claims 1 to 9, wherein 140 to 220 parts by weight, preferably 150 to 210 parts by weight, preferred 160 to 200 parts by weight of hydraulic binding agent are contained in the mortar, wherein, furthermore, 140 to 220 parts by weight, preferably 150 to 210 parts by weight, preferred 160 to 200 parts by weight of latently hydraulic binding agent are contained in the mortar, wherein, further, 6 to 17 parts by weight, preferably 7 to 16 parts by weight, preferred 8 to 15 parts by weight of polymer foam particles are contained in the mortar, wherein, in addition, 1 to 7 parts by weight, preferably 2 to 6 parts by weight, preferred 3 to 5 parts by weight of liquid foam are contained in the mortar and wherein, furthermore, 100 to 170 parts by weight, preferably 110 to 160 parts by weight, preferred 120 to 150 parts by weight of water are contained in the mortar.

11. The use according to any one of the claims 1 to 10, wherein the density of fresh mortar is set to 300 to 1,000 kg/m³, preferably 400 to 800 kg/m³ and preferred to 400 to 650 kg/m³.

## Revendications

1. Utilisation d'un mélange de mortiers en tant que mortier pour interstices annulaires dans la construction de tunnels souterrains, pour le remplissage des espaces creux et pour l'absorption flexible de forces mécaniques lorsque le mortier est durci,
au moins un agent de liaison hydraulique étant contenu,
par ailleurs, des particules d'au moins une mousse polymère étant contenues dans le mortier, en tant que granulat et en outre au moins une mousse liquide, ainsi que de l'eau étant contenues dans le mortier.

2. Utilisation selon la revendication 1, l'au moins un agent de liaison hydraulique étant au moins un ciment.

3. Utilisation selon l'une quelconque des revendications 1 ou 2, au moins un agent hydraulique latent, de préférence de la cendre volante étant contenue dans le mortier.

4. Utilisation selon l'une quelconque des revendications 1 à 3, les particules consistant dans la mousse polymère et dans du polystyrène expansé.

5. Utilisation selon l'une quelconque des revendications 1 à 4, les particules de la mousse polymère présentant un diamètre de 0,2 à 7 mm, de préférence de 0,3 à 6 mm et de manière préférée de 0,3 à 5 mm.

6. Utilisation selon l'une quelconque des revendications 1 à 5, une mousse liquide sur base d'agents tensio-actifs étant mise en oeuvre.

7. Utilisation selon l'une quelconque des revendications 1 à 6, la densité de la mousse liquide étant de 0,05 à 0,11 kg/dm³, de préférence de 0,06 à 0,1 kg/dm³ et de manière préférée de 0,07 à 0,09 kg/dm³.

8. Utilisation selon l'une quelconque des revendications 1 à 7, la mousse liquide étant contenue dans le mortier dans une quantité de 1 à 7 kg/m³, de préférence de 2 à 6 kg/m³ et de manière préférée de 5 kg/m³.

9. Utilisation selon l'une quelconque des revendications 1 à 8, le volume de la mousse liquide ajoutée au mortier étant de 20 à 100 dm³/m³, de préférence de 25 à 95 dm³/m³ et de manière préférée de 30 à 90 dm³/m³.

10. Utilisation selon l'une quelconque des revendications 1 à 9, de 140 à 220 GT, de préférence de 150 à 210 GT, de manière préférée de 160 à 200 GT d'agent de liaison hydraulique étant contenus dans le mortier, par ailleurs, de 140 à 220 GT, de préférence de 150 à 210 GT, de manière préférée de 160 à 200 GT d'agent de liaison hydraulique latent étant contenus dans le mortier, en outre de 6 à 17 GT, de préférence de 7 à 16 GT, de manière préférée de 8 à 15 GT de particules de mousse polymère étant contenus dans le mortier, de surcroît de 1 à 7 GT, de préférence de 2 à 6 GT, de manière préférée de 3 à 5 GT de mousse liquide étant contenus dans le mortier et par ailleurs de 100 à 170 GT, de préférence de 110 à 160 GT ; de manière préférée de 120 à 150 GT d'eau étant contenus dans l'eau.

11. Utilisation selon l'une quelconque des revendications 1 à 10, la densité du mortier frais étant réglée à de 300 à 1.000 kg/m3, de préférence à de 400 à 800 kg/m3 et de manière préférée à de 400 à 650 kg/m3.
